# EUROPÄISCHE PATENTANMELDUNG

(11) **EP 2 338 664 A1**
(43) Veröffentlichungstag der Anmeldung: **29.06.2011**
(21) Anmeldenummer: 09015935.1
(22) Anmeldetag: 23.12.2009
(51) Int. Cl.: B29C 51/10, B29C 51/14

(54) **Verfahren zur Herstellung eines verformten Folienteils aus thermoplastischem Kunststoff**

(71) Anmelder: Bayer MaterialScience AG, 51368 Leverkusen (DE)
(72) Erfinder: Die Erfindernennung liegt noch nicht vor

(57) **Zusammenfassung**

Beschrieben wird ein Verfahren zur Herstellung eines wenigstens teilweise mit Druckpasten bedruckten, und/oder metallisierten, tiefgezogenen Folienteils, das ein oder mehrere weitere Schichten enthalten kann, mit wenigstens nachstehenden Verfahrensschritten:
- es wird ein, ebenes, auf einer oder auf beiden Oberfläche(n) wenigstens teilweise bedrucktes, metallisiertes und/oder sonst wie beschichtetes Folienstück aus wenigstens einem thermoplastischen Kunststoff bereitgestellt,
- dieses Folienstück wird auf einer Fördereinrichtung angebracht, wobei lediglich randseitige Abschnitte des Folienstücks auf der Fördereinrichtung aufliegen; und die Folie mechanisch oder optisch positioniert wird
- das so auf der Förderinrichtung aufliegende Folienstück wird in eine Heizzone eingebracht, und dort wenigstens der Folienabschnitt, der tiefgezogen wird, auf eine vorgegebene Temperatur erwärmt; und
- das so erwärmte Folienstück wird anschließend in eine Verformungszone eingebracht und dort mit einem fluiden Druckmittel beaufschlagt und isostatisch zu dem gewünschten Tiefziehteil verformt.
wobei die Folie vor der Verformung derart eingeschnitten wird, dass die Schnittkante nach der Verformung an der Grenze zwischen Nutzbereich (nach der Verformung) und Produktbereich liegt.

## Beschreibung

Die vorliegende Erfindung betrifft ein Verfahren zur Herstellung eines wenigstens teilweise bedruckten und/oder metallisierten und/oder sonst wie beschichteten, verformten Folienteils aus wenigstens einem thermoplastischen Kunststoff, bevorzugt aus Polycarbonat (PC) oder aus Polymethylmethacrylat bzw. Poly(meth)acrylat (PMMA), wobei die Folie vor der Verformung eingeschnitten wird.

Abhängig von ihrer Anwendung weisen die erfindungsgemäß erhältlichen, (tiefgezogenen Folienteile bzw. Tiefziehteile typischerweise eine, einem vorgegebenen Layout folgende, graphische, funktionale und/oder dekorative Gestaltung mit unterschiedlich gefärbten Abschnitten und gegebenenfalls mit zusätzlich einem oder mehreren transparenten Abschnitt(en) auf. Diese Tiefziehteile können beispielsweise als Leuchtenabdeckungen, als beleuchtete Schilder, als Gehäuseteile, als Druck- oder Schalter-Tasten, als Antennen, als selbstleuchtende, insbesondere elektrolumineszente Flächen, als beheizbare Flächen, als Display-Einrichtungen, als Skalen-, Armaturen- und/oder Instrumenten-Anzeigetafeln, sowie als Zifferblätter und Signalanzeigen verschiedenster Art eingesetzt werden.

Das grundlegende Verfahren zur Umformung einer Platte oder Folie aus Kunststoff zu einem meist relativ einfach geformten Formkörper ist das Thermoformen oder "Thermoforming". Hier wird das ebene Ausgangsmaterial auf eine so hohe Formungstemperatur erwärmt, dass es weich und plastisch wird, und in diesem Zustand unter Einwirkung relativ geringer Formkräfte die Kontur eines Formwerkzeugs angeformt werden kann. Diese Formkräfte können beispielsweise aufgebracht werden durch Anlegung von Vakuum (Vakuumverfahren), durch Beaufschlagung mit einem fluiden Druckmittel unter einem Druckmitteldruck bis zu etwa 4 bis 6 bar (Pressluftverfahren) oder durch eine Kombination beider Maßnahmen. Da beim Thermoformen nur mit relativ geringen Formkräften gearbeitet wird, muss das Material zur Umformung sehr weich und plastisch sein. Typischerweise werden so relativ einfach geformte Formkörper wie Gehäuse und Behälter erhalten. Eine präzise Wiedergabe einer graphischen Gestaltung und/oder eine echte und genaue Abformung scharfkantiger Strukturen der ebenen Ausgangsfolie je am fertigen Formkörper ist nicht möglich.

Ein ähnliches Verfahren ist aus dem Dokument EP 0 371 425 A1 bekannt; dieses Verfahren wird in der Fachwelt auch als "Hochdruckverformung bzw. Hochdruckumformung" von Kunststoff-Folien bzw. als "Höchstdruckverfahren" bzw. als "Kaltverformen von Folien nach dem High Pressure Forming" bzw. als HPF-Verfahren (von High Pressure Forming) bezeichnet. Nach diesem bekannten Verfahren wird beispielsweise eine transparente, eine Schichtdicke von 125 µm aufweisende PC-Folie (Makrofol®, bezogen von Bayer MaterialScience AG) mit einer Erweichungstemperatur von etwa 150 °C auf eine Arbeitstemperatur im Bereich von 90 bis 120 °C erwärmt und daraufhin mit Hilfe von Druckluft von 150 bar umgeformt.

Die mittels Hochdruckverformung, tiefgezogenen Folienteile werden häufig noch mit weiterem transparenten Kunststoff hinterspritzt, um formstabile Produkte bereitzustellen. Diese Verfahren werden in der Fachwelt auch als Insert Moulding bezeichnet. Zum Hinterspritzen bzw. Insert Moulding wird das bedruckte und tiefgezogene Folienteil in ein Spritzgusswerkzeug eingelegt und beispielsweise mit einer 0,5 bis 3,0 mm dicken Schicht eines thermoplastischen Kunststoffs hinterspritzt. Zum Hinterspritzen eignen sich thermoplastische Kunststoffe wie etwa Polycarbonat (PC), Mischungen aus PC mit Acrylnitril-Butadien-Styrol-Copolymerisaten (ABS) oder PMMA-Materialien.

Die genannten Verfahren, wie etwa Insert Moulding, Compression Moulding und weitere Verfahren dieser Art, sind allgemein bekannt und liefern mehrschichtige, gegebenenfalls dünnwandige Formkörper, bei denen die Dekorfolie eine Außenschicht bildet, das Dekor selbst sich jedoch innerhalb der Formkörpermasse befindet und damit vor Abrieb geschützt ist. Der Kontakt mit der schmelzflüssigen Kunststoffmasse kann das Dekor an der Dekorschicht beeinträchtigen.

Bei der Umformung/Verformung von Materialien wie Kunststoffen, Textilien und Holzfurnier kommt es zu einer Materialdehnung bzw. Streckung. Dementsprechend wird das Material, abhängig von der Geometrie, ausgedünnt und die aufgebrachte Farbe, Paste bzw. Schicht verändert. Es entsteht ein Verzug und/oder es kommt zu Rissbildungen. Aufgrund dieser Materialveränderung verzerrt sich das Druckbild, welches durch mehrere Iterationsschleifen (mit jeweils neu angepasstem 2D-Druckbild) optimiert werden muss. Bei der 3D-Verformung von Folien in thermischen Verformverfahren über einen dreidimensionalen Formkörper (wie HPF-Verformung und Thermotiefziehen), ist es erforderlich die Verstreckung in wichtigen Folienbereichen zu minimieren, um beispielsweise Risse in metallisierten oder mit den Schichten einer Elektroluminenszenz-Anordnung versehenen Folienbereichen, d.h. Folien mit elektrisch leitfähigen Strukturen, zu vermeiden. Durch das gezielte Einschneiden der Folie außerhalb des Produktbereiches, kann die Verstreckung in kritischen Verformungszonen des Produktes minimiert werden. Der Einschnitt in der Folie wirkt wie ein Entlastungsschnitt, so dass der umliegende Folienbereich beim Formprozess - aufgrund der einseitig fehlenden Zugkräfte - nicht gedehnt wird. Dadurch kann die Funktionalität der elektrischen Leiterbahnen erfüllt werden, wie die hohen Anforderungen an die Rissfreiheit, die Leitfähigkeit und einen geringen Verlustwiderstand im Frequenzbereich von 1Hz - 15GHz. , bevorzugt 100 KHz bis 6,8 GHz , besonders bevorzugt 85 MHz -2,5 GHz. Insbesondere bei 3D-verformten Antennenstrukturen, insbesondere bei Handyschalen mit integrierter Antenne, ist es wichtig rissfreie leitfähige Strukturen en zu erhalten.

Die Anforderungen an minimale Versteckung und Präzision der Verformung sind insbesondere bei dieser Anwendung sehr hoch.

Davon ausgehend, besteht die Aufgabe der vorliegenden Erfindung darin, ein Verfahren bereitzustellen, mit dem tiefgezogene und formstabile Folienteile aus wenigstens einem thermoplastischen Kunststoff, in besonders bevorzugten Ausführungsformen aus Polycarbonat (PC) oder aus Polymethylmethacrylat bzw. Poly(meth)acrylat (PMMA) erhältlich sind, die nach der Hochdruckumformung oder Thermoverformung eine unveränderte (reproduzierbare), extrem genaue Positionierung der ursprünglichen grafischen, funktionalen und/oder dekorativen Gestaltung in einer Größenordnung von vorzugsweise ±0,1 mm aufweisen.

Eine ebene Folie, die auf der einen Oberfläche mit der vorstehend erläuterten, mehrschichtigen grafischen, funktionalen und/oder dekorativen Gestaltung versehen ist, und die auf der anderen Oberfläche eine Schicht aus farblosem Strukturlack aufweisen kann, wird mit Hilfe des erfindungsgemäßen Verfahrens zu einem dauerhaft dreidimensional verformten und formstabilen Tiefziehteil umgeformt. Hierbei verlangen die Abnehmer solcher Tiefziehteile eine extrem genaue Positionierung der grafischen, funktionalen und/oder dekorativen Gestaltung am fertigen Tiefziehteil. Die Abweichungen zwischen dieser Gestaltung an der ursprünglich ebenen Folie und der entsprechenden Gestaltung am fertigen Tiefziehteil betragen vorzugsweise nicht mehr als ± 0,1 mm.

Eine weitere Aufgabe der Erfindung besteht darin, ein Verfahren zur Verfügung zu stellen, dass eine verstreckungsarme und möglichst rissfreie Verformung definierter Bereichen des Produktes ermöglicht. Eine weitere Aufgabe der Erfindung besteht darin, ein Verfahren zur Verfügung zu stellen, bei dem die Folienbereiche, die die mit elektrisch leitfähigen Strukturen versehenen Bereiche umfassen oder die nach vollständiger Verformung und Konfektionierung das Produkt darstellen, bei der Verformung von Druck zu entlasten.

Der Vorteil des erfindungsgemäßen Verfahrens besteht darin, das die Verstreckung (Materialdehnung) in Teilbereichen der verformten Folie gezielt und drastisch reduziert werden kann, so dass aufgedruckte funktionelle Schichten, beispielsweise Leitschichten- und/oder die Schichten einer Elektroluminenszenz-Anordnung, in diesem Bereichen nicht reißen und viel genauer positioniert werden können. Damit wird die Designfreiheit des Formverfahrens deutlich erweitert bzw. technische Anwendungen wie Leiterbahnen auf 3D-Formkörpern erst möglich. Unter Folien im Sinne der vorliegenden Erfindung werden insbesondere funktionale Folien verstanden, Der Begriff funktionale Folien umfasst unter anderem EL-Anordnungen und Leitschichten bzw. Leiterbahnen, Bei den erfindungsgemäß zu verformenden Folienstücken aus wenigstens einem thermoplastischen Kunststoff kann es sich auch um eine mehrschichtige Koextrusionsfolie aus wenigstens zwei unterschiedlichen thermoplastischen Kunststoffen handeln.

Die Aufgabe wurde dadurch gelöst, dass vor der Verformung das zu verformende Material bzw. die Folie derart eingeschnitten wird, dass die Schnittkante nach der Verformung an der Grenze zwischen Außenbereich (nach der Verformung) und Produktbereich liegt. Die genaue Lage des Schnittes bzw. der Schnitte ist durch Iterationsschritte zu ermitteln. Eingeschnitten im Sinne der vorliegenden Erfindung heißt, dass das zu verformende Material bzw. die Folie in der ganzen Dicke durchtrennt wird. Jedoch ist es auch möglich, dass das zu verformende Material bzw. die Folie nicht in der ganzen Dicke durchtrennt wird. Dies gilt insbesondere dann, wenn gewährleistet ist, dass während des Verformungsvorgangs das zu verformende Material bzw. die Folie an den eingeschnittenen Bereichen durchtrennt wird. Das zu verformende Material bzw. die Folie wird dabei naturgemäß nicht vollumfänglich an der Grenze zwischen Außenbereich (nach der Verformung) und Produktbereich eingeschnitten, sondern auf 1 bis 99 %, bevorzugt auf 10 bis 90 %, besonders bevorzugt auf 20 bis 80 %, ganz besonders bevorzugt auf 40 bis 60 % dieses Umfangs, bzw. in Bereichen, die sich für den Fachmann aus den Erfordernissen der Verformungsgeometrie ergeben. Auch die Lage der nicht eingeschnitten Bereiche (Stege) ergibt sich für den Fachmann aus der Verformungsgeometrie. Bei nicht runden und/oder nicht ellipsenförmigen Umfängen sind die Stege vorzugsweise so angeordnet, dass die Ecken der Umfangsform von einem Steg gehalten werden. Allgemein ist bevorzugt, dass der Bereich bzw. die Bereiche mit dem/den größten Krümmungsradius/-radien von einem Steg bzw. von Stegen gehalten werden. Die Einschnitte werden in den Bereichen der Verformungsgeometrie angebracht, in denen die Verstreckung minimal bzw. gegen 0 laufend sein soll.

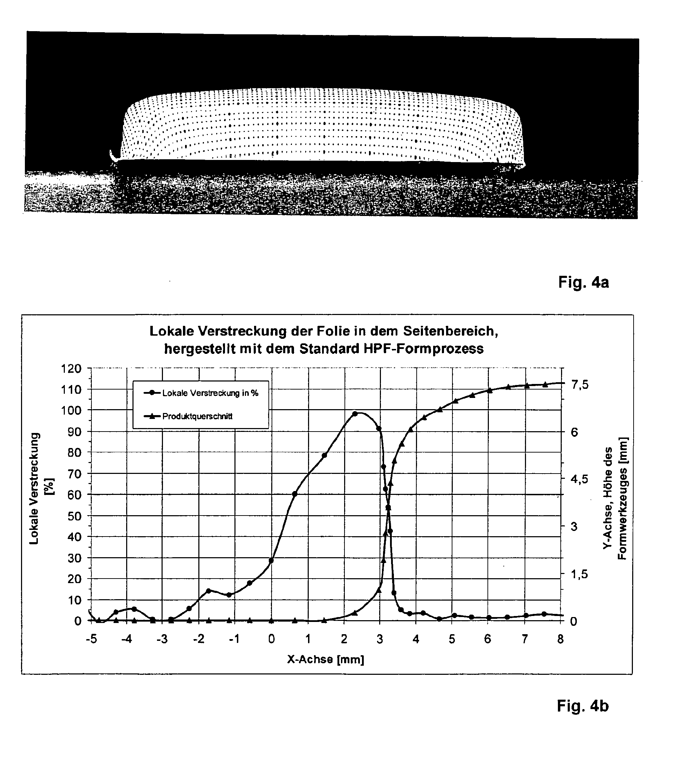

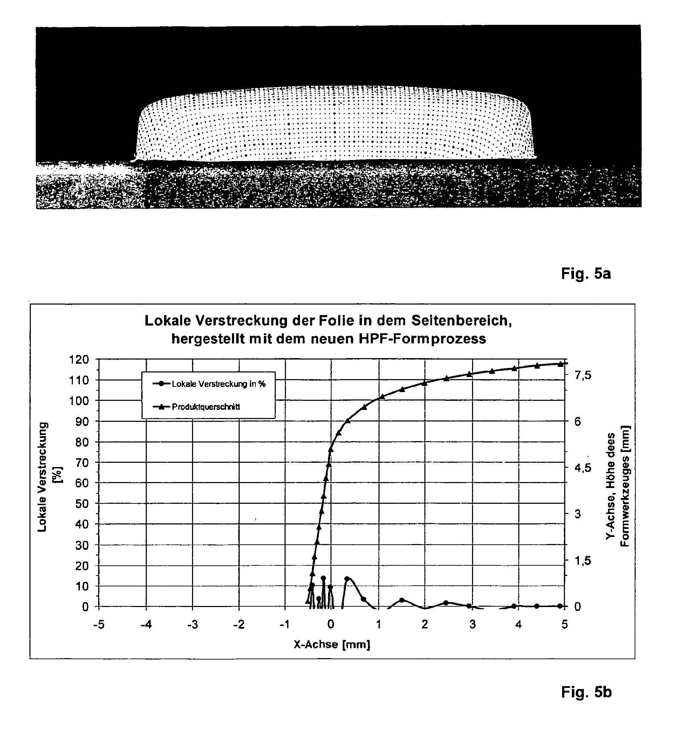

Durch diese Vorgehensweise tritt eine deutliche geringere Verzerrung des Druckbildes und damit auch eventuell aufgebrachter Leiterbahnen auf. Weiterhin werden die Pasten bzw. EL-Schichten nicht bzw. nur minimal bezogen auf die Schichtdicke dünner, da die Folie nicht oder nur minimal verstreckt wird und ein Aufreißen der Pasten und/oder EL-Schichten deutlich verringert bis vermieden wird. Die Verstreckung sollte im Nutzbereich geringer als 40%, bevorzugt geringer 20%, besonders bevorzugt geringer 5% sein. Im Extremfall kann sogar ohne Verstreckung (0%) verformt werden. Durch dieses Verfahren kann die lokale Verstreckung in dem Produktbereich an einem Formteil von maximal 100% auf weniger als 20%, bevorzugt weniger als 10% reduziert werden, bezogen auf die Länge der unverstreckten Folie (siehe Figur 4b und Figur 5b). Die Verstreckung wird ermittelt mittels eines fotografischen Verfahrens mit Maßstabskalibrierung und anschließender CAD-Auswertung. Gegenstand der vorliegenden Erfindung ist daher ein Verfahren zur Herstellung eines wenigstens teilweise mit Druckpasten bedruckten, und/oder metallisierten, tiefgezogenen Folienteils, das ein oder mehrere weitere Schichten enthalten kann, mit wenigstens nachstehenden Verfahrensschritten:
- es wird ein, ebenes, auf einer oder auf beiden Oberfläche(n) wenigstens teilweise bedrucktes, metallisiertes und/oder sonst wie beschichtetes Folienstück aus wenigstens einem thermoplastischen Kunststoff bereitgestellt,
- dieses Folienstück wird (beispielsweise per Rahmen oder Rolle-zu-Rolle) auf einer Fördereinrichtung angebracht, wobei lediglich randseitige Abschnitte des Folienstücks auf der Fördereinrichtung aufliegen; und die Folie mechanisch oder optisch positioniert wird
- das so auf der Förderinrichtung aufliegende Folienstück wird in eine Heizzone eingebracht, und dort wenigstens der Folienabschnitt, der tiefgezogen wird, auf eine vorgegebene Temperatur erwärmt; und
- das so erwärmte Folienstück wird anschließend in eine Verformungszone eingebracht und dort mit einem fluiden Druckmittel beaufschlagt und isostatisch zu dem gewünschten Tiefziehteil verformt.
**dadurch gekennzeichnet, dass** die Folie vor der Verformung eingeschnitten wird, derart dass die Schnittkante nach der Verformung an der Grenze zwischen Nutzbereich (nach der Verformung) und Produktbereich liegt.

Um den Druckaufbau - mit dem eingeschnittenen Folienteil - zu ermöglichen, kann eine elastische Membran stationär in der Oberhälfte des Formwerkzeuges eingebracht sein (Hytech-Verfahren, US5932167A, US6210623B1, US6257866B1). Alternativ kann eine solche dichtende Membran auf das Folienteil aufgelegt werden, sobald das Folienteil auf der Transporteinrichtung angebracht ist.

Das Einschneiden der Folie kann mit jeglichem zum Einschneiden geeigneten Werkzeug erfolgen, Beispiele sind Messer, Schere, Stanzwerkzeuge. Perforationen werden ebenfalls unter dem Begriff "Einschneiden" subsumiert.

Die Verformung kann nach den bekannten Verformungsverfahren, wie High Pressure Forming (HPF) oder Thermoformen durchgeführt werden. Das HPF Verfahren ist beispielsweise in WO 2009/043539 und dort zitierter Referenzen beschrieben.

Definition : Der Nutzbereich der Folie ist der Bereich, der nach dem Verformen und Ausstanzen Teil des Endproduktes (im Folgenden auch Produkt genannt) wird. Der Außenbereich der Folie ist der Bereich, der nicht Teil des Endproduktes ist.

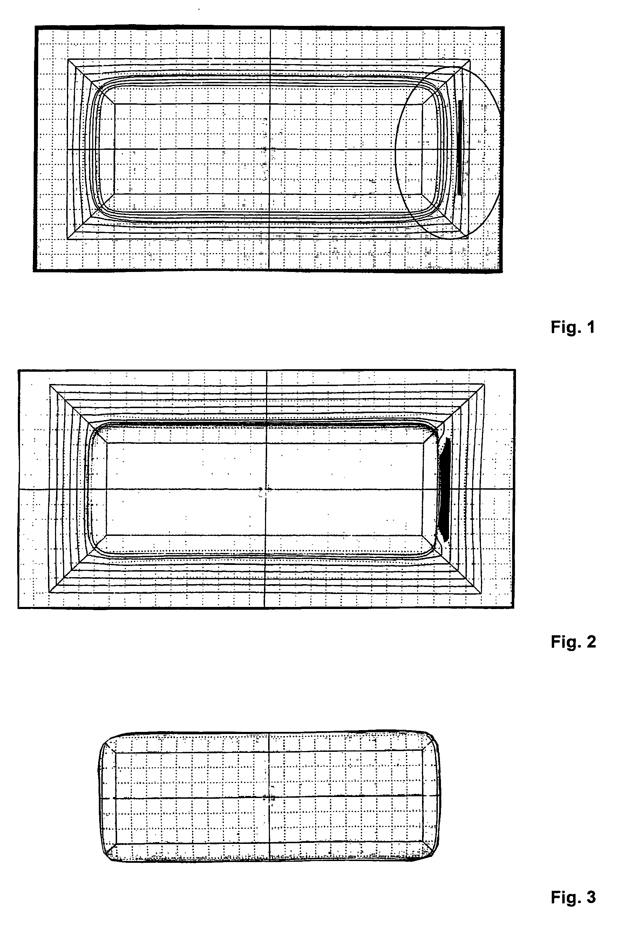

Fig. 1 stellt. eine bedruckte unverformte Folie dar, die in dem umkreisten Bereich eingeschnitten ist.
Fig. 2 stellt die Folie aus Fig. 1 nach der Verformung dar.
Fig. 3 stellt die verformte und ausgestanzte Folie dar (Produktbereich der Folie).
Fig. 4 a bildet die Seitenkante der verformten und ausgestanzten Folie ab, so wie sie mit dem Standard_HPF-Verfahren erzeugt wird; der Abstand der punktierten Linien ist proportional der lokalen Verstreckung,
Fig. 4b stellt die Versteckung der Folie aus Fig. 4a graphisch dar.
Fig. 5 a bildet die Seitenkante der verformten und ausgestanzten Folie ab, so wie sie mit dem erfindungsgemäßen Verfahren erzeugt wird; der Abstand der punktierten Linien ist proportional der lokalen Verstreckung.
Fig. 5b stellt die Versteckung der Folie aus Fig. 5a graphisch dar.

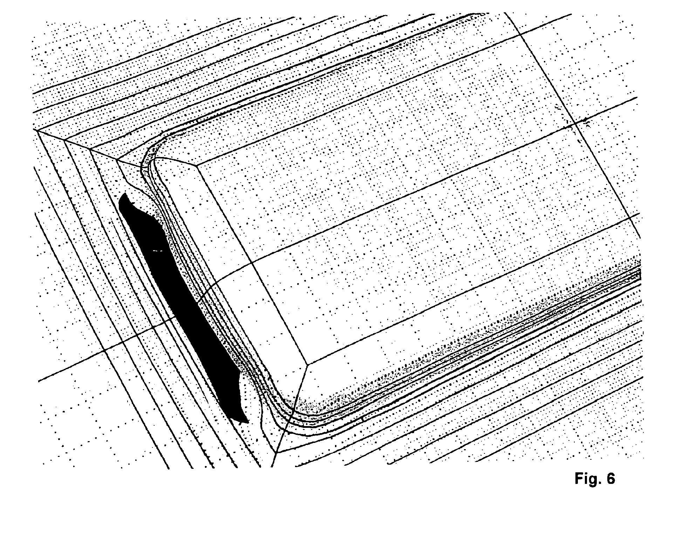

Fig. 6 zeigt eine Ausschnittvergrößerung des eingeschnittenen Bereiches und des verformten Produktbereiches, der aufgrund des Einschnittes nur sehr gering gedehnt worden ist.

Das erfindungsgemäße Verfahren bietet gegenüber den Verfahren gemäß Stand der Technik den Vorteil, dass mit diesem Verfahren verformte Folienteile mit deutlich größeren Verformtiefen ohne Risse in der Folie oder den Druckschichten erreichbar sind, weil die Verstreckung der Folie gezielt in diesen Bereichen der Bedruckung reduziert wurde. Die Abbildungsgenauigkeit lässt sich durch das Verfahren deutlich verbessern, weil in den kritischen Formteilbereichen die Verstreckung gezielt reduziert wird, und dadurch im Extremfall (Verstreckung 0%) eine Abwicklung der Folie auf der Formgeometrie erfolgt..

Typischerweise werden Folienstücke im Dickenbereich von 50 µm bis 2.000 µm, vorzugsweise im Dickenbereich von 90 bis 750 µm, besonders bevorzugt im Dickenbereich von 125 bis 600 µm und ganz besonders bevorzugt im Dickenbereich von 175 bis 375 µm in das erfindungsgemäße Verfahren eingesetzt. Das Verfahren kann auch für dickere Folien bis zu 5 mm eingesetzt werden. Bei diesen Folien sollte die Temperaturverteilung über die Foliendicke beim Aufheizen berücksichtigt werden. Dies erfordert bei Folienunter- und -oberseite ein gleichmäßiges Beheizen mit geringerem Aufheizgradienten, d.h einer um den Faktor 2 bis 10 langsameren Aufheizrate als bei Folien einer Dicke bis 500 µm. Bei Folien einer Dicke bis 500 µm beträgt die Aufheizrate üblicherweise 5 bis 10°C pro Sekunde, wie dem Fachmann allgemein bekannt ist.

Bei dem thermoplastischen Kunststoff kann es sich bevorzugt um wenigstens einen thermoplastischen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, bevorzugt um wenigstens einen thermoplastischen Kunststoff ausgewählt aus Polymerisaten von ethylenisch ungesättigten Monomeren und/oder Polykondensaten von bifunktionellen reaktiven Verbindungen handeln. Für bestimmte Anwendungen kann es vorteilhaft und demnach bevorzugt sein, einen transparenten thermoplastischen Kunststoff einzusetzen.

Besonders geeignete thermoplastische Kunststoffe sind in WO 2009/043534 beschrieben und sind Polycarbonate oder Copolycarbonate auf Basis von Diphenolen, Poly- oder Copolyacrylate und Poly- oder Copolymethacrylate wie beispielhaft und vorzugsweise Polymethylmethacrylat bzw. Poly(meth)acrylat (PMMA), Poly- oder Copolymere mit Styrol wie beispielhaft und vorzugsweise Polystyrol oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS^{®}, Hoechst), Poly- oder Copolykondensate der Terephthalsäure, wie beispielhaft und vorzugsweise Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT) oder Mischungen aus den vorangehend genannten sowie Polyethersulfone. Polyolefine, wie z.B. Polypropylen, ohne Zusatz anderer vorangehend genannter thermoplastischer Kunststoffe sind allerdings für das erfindungsgemäße Verfahren weniger bevorzugt.

Bevorzugte thermoplastische Kunststoffe sind Polycarbonate oder Copolycarbonate, Poly- oder Copolyacrylate, Poly- oder Copolymethacrylate oder Blends enthaltend wenigstens einen dieser thermoplastischen Kunststoffe. Besonders bevorzugt sind Polycarbonate oder Copolycarbonate, insbesondere mit mittleren Molekulargewichten M_{w} von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten M_{w} von 10.000 bis 200.000, bevorzugt von 26.000 bis 120.000 oder Poly- oder Copolyacrylate und Poly- oder Copolymethacrylate mit mittleren Molekulargewichten M_{w} im Bereich von 30 000 bis 300 000, besonders bevorzugt im Bereich von 80 000 bis 250 000.

Bevorzugte Polyalkylenterephthalate sind solche, die allein aus Terephthalsäure und deren reaktionsfähigen Derivaten (z. B. deren Dialkylestern) und Ethylenglykol und/oder Butandiol-1,4 und/oder 1,4-Cyclohexandimethanol-Reste hergestellt worden sind, und Mischungen dieser PolyalkylenterephthalatePolyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Bevorzugt sind ferner auch Blends von wenigstens einem Polycarbonat oder Copolycarbonat mit wenigstens einem Polyalkylenterephthalat, bevorzugt einem der oben genannten. Das Blend enthält bevorzugt 1 bis 90 Gew.-% , bevorzugt 20 bis 85 Gew.-% Polycarbonat oder Copolycarbonat und 99 bis 10 Gew.-%, bevorzugt 80 bis 15 Gew.-% Polyalkylenterepthathalat.. Blends aus Polycarbonaten mit Pfropfpolymerisaten mit Polybutadien oder Acrylatkautschuken als Pfropfgrundlage (ABS oder ASA Pfropfpolyjmerisate) sind ebenfalls geeignet.

Bevorzugte Polycarbonate enthalten mindestens ein Diphenol ausgewählt aus 4,4'-Dihydroxydiphenyl, 2,2-Bis-(4-hydroxyphenyl)-propan und 1,1-Bis-(4-hydroxyphenyl)-3,3,5-trimethyl-cyclohexan Als Polymethyl(meth)acrylat können sowohl Polymethyl(meth)acrylat (PMMA) als auch schlagzäh modifiziertes PMMA (sz-PMMA), Blends aus PMMA oder aus sz-PMMA eingesetzt werden. Sie sind unter der Marke Plexiglas bei der Röhm GmbH erhältlich. Unter Polymethyl(meth)acrylat werden sowohl Polymere der Methacrylsäure und ihrer Derivate, beispielsweise ihrer Ester, als auch Polymere der Acrylsäure und ihrer Derivate als auch Mischungen aus beiden vorstehenden Komponenten verstanden.

Bevorzugt sind Polymethyl(meth)acrylat-Kunststoffe mit einem Methylmethacrylat-Monomeranteil von mindestens 80 Gew.-%, bevorzugt mindestens 90 Gew.-% und gegebenenfalls 0 Gew.-% bis 20 Gew.-%, bevorzugt 0 Gew.-% bis 10 Gew.-% weiterer vinylisch copolymerisierbarer Monomere wie z. B. C1- bis C8-Alkylestern der Acrylsäure oder der Methacrylsäure, z. B. Methylacrylat, Ethylacrylat, Butylacrylat, Butylmethacrylat, Hexylmethacrylat, Cyclohexylmethacrylat, ferner Styrol und Styrolderivate, wie beispielsweise [alpha]-Methylstyrol oder p-Methylstyrol. Weitere Monomere können sein Acrylsäure, Methacrylsäure, Maleinsäureanhydrid, Hydroxyester der Acrylsäure oder Hydroxyester der Methacrylsäure.

Bei den erfindungsgemäß zu verformenden Folienstücken enthaltend wenigsten eine thermoplastischen Kunststoff kann es sich auch um ein Elektrolumineszens (EL)-Element handeln, mit einen Schichtaufbau umfassend (herkömmlicher Aufbau):
a) ein zumindest teilweise transparentes Substrat, Komponente A, vorzugsweise der thermoplastische Kunststoff,
b) mindestens eine auf das Substrat aufgebrachte EL-Anordnung, Komponente B, enthaltend die folgenden Komponenten:
   ba) eine zumindest teilweise transparente Elektrode, Komponente BA, als Frontelektrode,
   bb) gegebenenfalls eine erste Isolationsschicht, Komponente BB,
   bc) eine Schicht, enthaltend mindestens ein durch ein elektrisches Feld anregbares Leuchtpigment (Elektroluminophor), EL-Schicht oder Pigmentschicht genannt, Komponente BC,
   bd) gegebenenfalls eine weitere Isolationsschicht, Komponente BD,
   be) eine Rückelektrode, Komponente BE,
   bf) eine Leiterbahn oder mehrere Leiterbahnen, Komponente BF, zur elektrischen Kontaktierung von sowohl Komponente BA als auch von Komponente BE, wobei die Leiterbahn oder die Leiterbahnen vor, nach oder zwischen den Elektroden BA und BE aufgebracht werden kann bzw. können, wobei vorzugsweise die Leiterbahn oder die Leiterbahnen in einem Arbeitsschritt aufgebracht werden. Die Leiterbahn oder Leiterbahnen können in Form eines Silberbusses, vorzugsweise hergestellt aus einer Silberpaste und/oder eines Silberlacks, aufgebracht sein. Eventuell kann vor dem Aufbringen des Silberbusses noch eine Graphitschicht aufgebracht werden,
c) einer Schutzschicht, Komponente CA oder einer Folie, Komponente CB.

Die Isolationsschichten BB und BD können unabhängig voneinander undurchsichtig, opak oder transparent sein.
Neben den genannten Schichten (Komponenten A, B und C) kann das erfindungsgemäß vorgesehene EL-Element (herkömmlicher Aufbau) weitere Schichten aufweisen. So kann das Substrat, wenn es selbst elektrisch leitend ist, mit einer zusätzlichen Isolationsschicht (Komponente AA), auf die dann die EL-Anordung aufgebracht wird, versehen sein oder werden. Außerdem kann das EL-Element eine oder mehreren Reflexionsschicht(en) aufweisen.

Bevorzugt wird die Reflexionsschichtschicht, soweit vorhanden, zwischen Komponente BA und Komponente BB bzw. BC, wenn Komponente BB fehlt, angeordnet.

Die Reflexionsschicht umfasst vorzugsweise Glaskügelchen, insbesondere Hohlglaskügelchen. Der Durchmesser der Glaskügelchen kann in weiten Grenzen verändert werden. So können sie eine Größe d₅₀ von im Allgemeinen 5 µm bis 3 mm, vorzugsweise 10 bis 200 µm, besonders bevorzugt 20 bis 100 µm, aufweisen. Die Hohlglaskügelchen sind dabei vorzugsweise in ein Bindemittel eingebettet.

Auf dem Substrat A und/oder zwischen Substrat A und der EL-Anordnung können außerdem ein oder mehrere zumindest teilweise transparente grafisch gestaltete Schichten angeordnet sein.

Alternativ kann das EL-Element auch folgenden Aufbau aufweisen (inverser Schichtaufbau):
a) ein zumindest teilweise transparentes Substrat, Komponente A, vorzugsweise der thermoplastische Kunststoff,
b) mindestens eine auf dem Substrat aufgebrachten EL-Anordnung, Komponente B, enthaltend die folgenden Komponenten:
   be) eine Rückelektrode, Komponente BE, die zumindest teilweise transparent sein kann,
   bb) gegebenenfalls eine erste Isolationsschicht, Komponente BB,
   bc) eine Schicht, enthaltend mindestens ein durch ein elektrisches Feld anregbares Leuchtpigment (Elektroluminophor), EL-Schicht oder Pigmentschicht genannt, Komponente BC,
   bd) gegebenenfalls eine weitere Isolationsschicht, Komponente BD,
   ba) eine zumindest teilweise transparente Elektrode, Komponente BA, als Frontelektrode,
   bf) eine Leiterbahn oder mehrere Leiterbahnen, Komponente BF, zur elektrischen Kontaktierung von sowohl Komponente BA als auch von Komponente BE, wobei die Leiterbahn oder die Leiterbahnen vor, nach oder zwischen den Elektroden BA und BE aufgebracht werden kann bzw. können, wobei vorzugsweise die Leiterbahn oder die Leiterbahnen in einem Arbeitsschritt aufgebracht werden. Die Leiterbahn oder Leiterbahnen können in Form eines Silberbusses, vorzugsweise hergestellt aus einer Silberpaste und/oder eines Silberlacks, aufgebracht sein. Eventuell kann vor dem Aufbringen des Silberbusses noch eine Graphitschicht aufgebracht werden,
c) eine zumindest teilweise transparenten Schutzschicht, Komponente CA und/oder einer Folie, Komponente CB.
   Neben den genannten Schichten (Komponenten A, B und C) kann das erfindungsgemäße EL-Element mit inversem Schichtaufbau weitere Schichten aufweisen. So kann das Substrat, wenn es selbst elektrisch leitend ist, mit einer zusätzlichen Isolationsschicht (Komponente AA), auf die dann die Elektroluminenszens-Anordung aufgebracht wird, versehen sein oder werden. Außerdem kann das EL-Element eine oder mehreren Reflexionsschicht(en) aufweisen.

Bevorzugt ist die Reflexionsschichtschicht, soweit vorhanden, zwischen Komponente BA und Komponente BD bzw. BC, wenn Komponente BD fehlt, angeordnet.

Auf der transparenten Schutzschicht C und/oder zwischen der transparenten Schutzschicht C und der EL-Anordnung können außerdem ein oder mehrere zumindest teilweise transparente grafisch gestaltete Schichten angeordnet sein. Insbesondere können die grafisch gestalteten Schichten die Funktion der Schutzschicht übernehmen.

Für den Fachmann ist es offensichtlich, dass die für den herkömmlichen Aufbau genannten besonderen Ausführungsformen und Merkmale, soweit nicht anders bestimmt, für den inversen Schichtaufbau entsprechend gelten.

Die eine oder mehreren Isolationsschicht(en) BB und/oder BD sowohl beim herkömmlichen Aufbau als auch beim inversen Aufbau kann bzw. können insbesondere dann entfallen, wenn die Komponente BC eine Schichtdicke aufweist, die einen Kurzschluss zwischen den beiden Elektroden Komponenten BA und BE verhindert.

Zum Betrieb der erfindungsgemäß hergestellten EL-Anordnung weisen die Elektroden BA und BE elektrische Anschlüsse auf, die an einen Seitenrand des erfindungsgemäßen Folienelements geführt werden und dort mittels Kontaktierhilfen mit einer Stromquelle kontaktiert werden.

EL-Elemente, die mit dem erfindungsgemäßen Verfahren verformt werden können sind darüber hinaus bekannt aus DE-A-102009017669, WO-A-2008003621, WO-A-2009027387 oder WO-A-2009053458.

## Patentansprüche

1. Verfahren zur Herstellung eines wenigstens teilweise mit Druckpasten bedruckten, und/oder metallisierten, tiefgezogenen Folienteils, das ein oder mehrere weitere Schichten enthalten kann, mit wenigstens nachstehenden Verfahrensschritten:
- es wird ein, ebenes, auf einer oder auf beiden Oberfläche(n) wenigstens teilweise bedrucktes, metallisiertes und/oder sonst wie beschichtetes Folienstück aus wenigstens einem thermoplastischen Kunststoff bereitgestellt ,
- dieses Folienstück wird (beispielsweise per Rahmen oder Rolle-zu-Rolle) auf einer Fördereinrichtung angebracht, wobei lediglich randseitige Abschnitte des Folienstücks auf der Fördereinrichtung aufliegen; und die Folie mechanisch oder optisch positioniert wird
- das so auf der Förderinrichtung aufliegende Folienstück wird in eine Heizzone eingebracht, und dort wenigstens der Folienabschnitt, der tiefgezogen wird, auf eine vorgegebene Temperatur erwärmt; und
- das so erwärmte Folienstück wird anschließend in eine Verformungszone eingebracht und dort mit einem fluiden Druckmittel beaufschlagt und isostatisch zu dem gewünschten Tiefziehteil verformt.
**dadurch gekennzeichnet, dass** die Folie vor der Verformung eingeschnitten wird, derart dass die Schnittkante nach der Verformung an der Grenze zwischen Nutzbereich (nach der Verformung) und Produktbereich liegt.

2. Verfahren gemäß Anspruch 1, wobei das Einschneiden mittels Messer, Schere, Stanzwerkzeug oder mittels Perforation erfolgen kann.
